(19) Europäisches Patentamt
European Patent Office
Office européen des brevets

(11) **EP 3 482 524 B1**

(12) **FASCICULE DE BREVET EUROPEEN**

(45) Date de publication et mention de la délivrance du brevet:
**29.09.2021 Bulletin 2021/39**

(21) Numéro de dépôt: **17735579.9**

(22) Date de dépôt: **10.07.2017**

(51) Int Cl.:
***H04L 9/30*** (2006.01)

(86) Numéro de dépôt international:
**PCT/EP2017/067248**

(87) Numéro de publication internationale:
**WO 2018/007645 (11.01.2018 Gazette 2018/02)**

(54) **PROCÉDÉ DE GÉNÉRATION DES PARAMÈTRES CARACTÉRISANT UN PROTOCOLE CRYPTOGRAPHIQUE**

VERFAHREN ZUR ERZEUGUNG VON PARAMETERN ZUR CHARAKTERISIERUNG EINES KRYPTOGRAFISCHEN PROTOKOLLS

METHOD FOR GENERATING PARAMETERS CHARACTERIZING A CRYPTOGRAPHIC PROTOCOL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.07.2016 FR 1601067**

(43) Date de publication de la demande:
**15.05.2019 Bulletin 2019/20**

(73) Titulaire: **Thales**
**92400 Courbevoie (FR)**

(72) Inventeurs:
• **DUBOIS, Renaud**
**92622 GENNEVILLIERS CEDEX (FR)**
• **BERNARD, Olivier**
**92622 GENNEVILLIERS CEDEX (FR)**

(74) Mandataire: **Lavoix**
**2, place d'Estienne d'Orves**
**75441 Paris Cedex 09 (FR)**

(56) Documents cités:
**EP-A1- 2 800 299**

• **DANIEL J BERNSTEIN ET AL: "How to manipulate curve standards: a white paper for the black hat", INTERNATIONAL ASSOCIATION FOR CRYPTOLOGIC RESEARCH,, vol. 20150927:155915, 27 septembre 2015 (2015-09-27), pages 1-44, XP061019522,**
• **Thomas Baignères et al: "Trap Me If You Can Million Dollar Curve With a Little Help from our Friends [3]", , 1 février 2016 (2016-02-01), XP055353828, Extrait de l'Internet: URL:http://cryptoexperts.github.io/million -dollar-curve/specifications/2016-02-01_tr ap-me-if-you-can.pdf**

## Description

La présente invention concerne un procédé de génération des paramètres caractérisant un protocole cryptographique. La présente invention se rapporte également à un procédé de transmission d'une courbe elliptique, un procédé de cryptage et un procédé de décryptage utilisant le procédé de génération. La présente invention concerne aussi un produit programme d'ordinateur et un support lisible d'informations associés.

La présente invention se rapporte au domaine de la cryptographie. La cryptographie est scindée en deux parties distinctes : la cryptographie symétrique et la cryptographie asymétrique.

La cryptographie asymétrique permet de réaliser des protocoles d'échange de clés ou de signature électronique. Le chiffrement RSA (nommé par les initiales de ses trois inventeurs) est un algorithme de cryptographie asymétrique qui est lent et gourmand en temps de calcul.

Notamment pour remédier à un tel inconvénient, les courbes elliptiques ont été développées pour les protocoles d'échange. De fait, les courbes elliptiques sont intéressantes pour la cryptographie par l'existence sur le groupe $(E(\mathbb{F}_p),+)$ d'une loi d'addition et de multiplication par un scalaire. La loi de multiplication par un scalaire définit le problème dit du logarithme discret sur courbes elliptiques, consistant à retrouver le scalaire k à partir de [k]P et P. Ce problème est calculatoirement difficile, c'est-à-dire que sa résolution n'est pas polynomiale en la taille en bits des éléments.

Pour assurer que le problème soit effectivement difficile, il convient que la courbe elliptique considérée vérifie un certain nombre de critères de sûreté.

Une courbe elliptique est considérée comme sûre si la courbe est insensible à une attaque générique du type rho de Pollard, à une attaque de type transfert, aux attaques utilisant des endomorphismes issus de la multiplication complexe, à une attaque sur la courbe associée par le phénomène de retournement (aussi désigné par le terme anglais de « twist ») et considérée comme rigide, c'est-à-dire que le procédé de génération est complètement explicite et ne comporte aucune étape arbitraire.

La génération d'une courbe elliptique sûre est donc difficile puisque de nombreux critères sont à vérifier ; en particulier la propriété de complète rigidité est très difficile à garantir.

Il existe donc un besoin pour un procédé de génération des paramètres d'une courbe elliptique qui permette d'obtenir de manière totalement rigide une courbe elliptique sûre.

Dans l'article de Daniel J. Bernstein et al. intitulé « How to manipulate curve standards : a white paper for the black hat » IACR ePrint, volume 20150927:155915 en date du 27 septembre 2015 décrit des générations de paramètres d'une courbe elliptique par utilisation de fonction de hachage.

L'article de Thomas Baignères et al. intitulé « Trap Me If You Can Million Dollar Curve » publié le 1er février 2016 et disponible à l'adresse https://eprint.iacr. org/2015/1249.pdf propose la génération rigide des paramètres d'une courbe elliptique.

Il est également connu du standard du NIST (National Institute of Standards and Technology) intitulé « Recommandation for Random Number Génération Using Deterministic Random Bit Generators » dans la version 800-90A, Révision 1 des techniques de génération de nombres aléatoires fondées sur l'utilisation d'une fonction de hachage.

Il est proposé un procédé de génération selon la revendication 1.

Il est aussi proposé un produit programme d'ordinateur selon la revendication 2.

Il est également proposé un support lisible d'informations selon la revendication 3.

D'autres caractéristiques et avantages de l'invention apparaîtront à la lecture de la description qui suit de modes de réalisation de l'invention, donnée à titre d'exemple uniquement et en référence aux dessins qui sont :

- figure 1, une vue schématique d'un exemple de système permettant la mise en œuvre des procédés, et
- figure 2, un ordinogramme d'un exemple de mise en œuvre d'un procédé de génération des paramètres d'une courbe elliptique et de transmission d'une courbe elliptique.

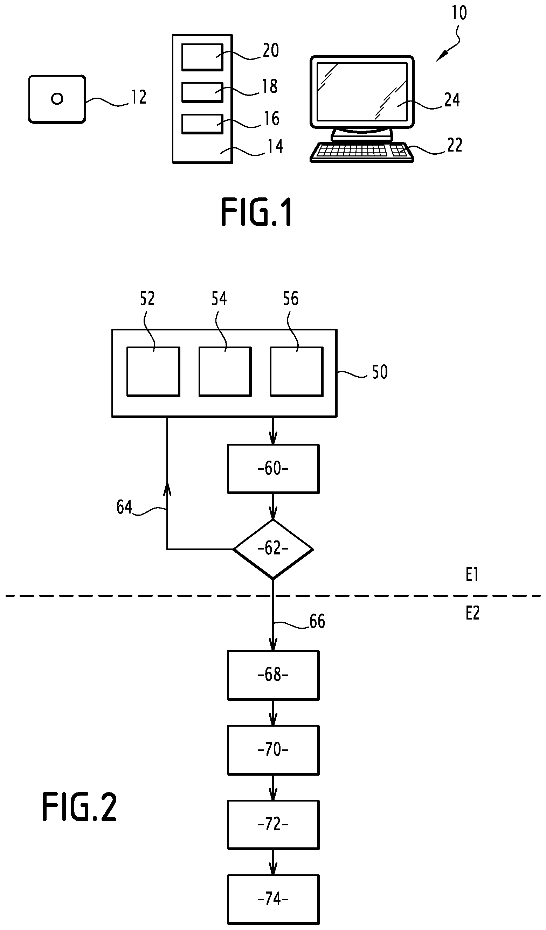

Un système 10 et un produit programme d'ordinateur 12 sont représentés à la figure 1. L'interaction du produit programme d'ordinateur 12 avec le système 10 permet de mettre en œuvre un procédé de génération des paramètres d'un protocole cryptographique.

Le système 10 est un ordinateur.

Plus généralement, le système 10 est un calculateur électronique propre à manipuler et/ou transformer des données représentées comme des quantités électroniques ou physiques dans des registres du système 10 et/ou des mémoires en d'autres données similaires correspondant à des données physiques dans des mémoires, des registres ou d'autres types de dispositifs d'affichage, de transmission ou de mémorisation.

Le système 10 comporte un processeur 14 comprenant une unité de traitement de données 16, des mémoires 18 et un lecteur 20 de support d'informations. Le système 10 comprend également un clavier 22 et une unité d'affichage 24.

Le produit programme d'ordinateur 12 comporte un support lisible d'informations 20.

Un support lisible d'informations 20 est un support lisible par le système 10, usuellement par l'unité de traitement de données 14. Le support lisible d'informations 20 est un médium adapté à mémoriser des instructions électroniques et capables d'être couplé à un bus d'un système informatique.

A titre d'exemple, le support lisible d'informations 20 est une disquette ou disque souple (de la dénomination anglaise de « floppy disk »), un disque optique, un CD-ROM, un disque magnéto-optique, une mémoire ROM, une mémoire RAM, une mémoire EPROM, une mémoire EEPROM, une carte magnétique ou une carte optique.

Sur le support lisible d'informations 20 est mémorisé un programme d'ordinateur comprenant des instructions de programme.

Le programme d'ordinateur est chargeable sur l'unité de traitement de données 14 et est adapté pour entraîner la mise en œuvre d'un procédé de génération des paramètres d'une courbe elliptique lorsque le programme d'ordinateur est mis en œuvre sur l'unité de traitement des données 14.

Le fonctionnement du système 10 en interaction avec le produit programme d'ordinateur 12 est maintenant décrit en référence à la figure 2 qui illustre un exemple de mise en œuvre d'un procédé de génération des paramètres d'une courbe elliptique.

Les courbes elliptiques utilisées en cryptographie sont généralement données sous forme de Weierstrass. Ce sont l'ensemble des points d'un corps fini $\mathbb{F}_p$ vérifiant l'équation suivante :

$$Y^2 = X^3 + aX + b \quad \mathrm{mod} \ p$$

Où:

- X et Y sont des éléments du corps fini $\mathbb{F}_p$,
- p est le module,
- a est le premier coefficient, et
- b est le deuxième coefficient.

Pour chacune des courbes, un ensemble de paramètres permet de connaître la courbe.

De manière simple, les paramètres sont le module p, le premier coefficient a et le deuxième coefficient b.

Ces trois paramètres suffisent à caractériser une courbe elliptique.

Pour pouvoir échanger des informations sur un canal dit public, il est également utilisé dans le cadre de la cryptographie d'autres paramètres parmi lesquels les coordonnées du point de base de la courbe notées (x, y), l'ordre de la courbe q ou le cofacteur h. Par définition, le cofacteur est le rapport entre l'ordre q et l'ordre du groupe engendré par le point de base (x,y) ; le point de base est choisi de telle sorte que ce cofacteur soit très petit.

Le procédé de génération comporte une phase de fourniture 50, une phase de calcul 60 et une phase de test 62 schématiquement représentées sur la figure 2.

La phase de fourniture 50 comporte une étape de choix d'un texte et d'initialisation de la valeur d'un compteur à une valeur initiale.

De préférence, le texte choisi comporte plus de 16 caractères.

Selon un exemple particulier, le texte est un texte propriétaire de la personne générant les paramètres, par exemple, un extrait d'une licence d'un produit vendu par cette personne. Cette licence est schématisée par un cadre avec un numéro de référence 54.

Afin de garantir la rigidité du processus proposé, il est recommandé que le texte choisi soit intelligible et permette d'identifier celui qui en revendique la propriété ou le contexte d'utilisation.

Selon une variante, le texte comporte également des données relatives à la date de mise en œuvre du procédé. Ces données sont schématisées par un cadre avec un numéro de référence 56.

Par exemple, il est possible de concaténer une partie du texte et une date.

Selon un autre exemple, le texte lui-même comporte la date. A titre d'illustration, le texte est « Cette courbe a été générée à telle date ».

Le compteur est, par ailleurs, initialisé à une valeur initiale, par exemple 1 (voir le cadre avec un numéro de référence 52).

La phase de calcul 60 comporte une pluralité d'étapes de calcul, d'application et une étape de détermination.

A la première étape de calcul, une première opération $O_1$ est appliquée sur le texte et la valeur du compteur, pour obtenir un premier résultat R1.

La première opération $O_1$ est une concaténation du texte, de la valeur du compteur et d'une première constante $C_1$. Une concaténation consiste à mettre bout à bout deux chaînes de caractère.

A la deuxième étape de calcul, une deuxième opération $O_2$ est appliquée sur le texte et la valeur du compteur, pour obtenir un deuxième résultat R2 distinct d'un premier résultat R1.

La deuxième opération $O_2$ est une concaténation du texte, de la valeur du compteur et d'une deuxième constante $C_2$ distincte de la première constante $C_1$.

A la troisième étape de calcul, une troisième opération $O_3$ est appliquée sur le texte et la valeur du compteur, pour obtenir un troisième résultat R3.

La troisième opération $O_3$ est une concaténation du texte, de la valeur du compteur et d'une troisième constante $C_3$ distincte de la première constante $C_1$ et distincte de la deuxième constante $C_2$.

Dans chacun des cas, il apparaît que chaque opération $O_1$, $O_2$ et $O_3$ comporte une concaténation du texte, de la valeur du compteur et d'une constante spécialisant de manière unique chaque sortie.

A la première étape d'application, il est appliqué une première fonction de hachage cryptographique H1 sur le premier résultat R1 pour obtenir une valeur pour le module p.

Une fonction de hachage est une fonction particulière qui, à partir d'une donnée fournie en entrée, calcule une empreinte servant à identifier rapidement, bien qu'incomplètement, la donnée initiale.

Selon l'exemple proposé, la fonction de hachage H1 est la fonction SHA-1.

Dans le cas illustré, la valeur obtenue pour le module p est égale à la valeur en hexadécimal du résultat obtenu par application de la première fonction de hachage cryptographique H1 sur le premier résultat R1.

A la deuxième étape d'application, il est appliqué une deuxième fonction de hachage cryptographique H2 sur le deuxième résultat R2 pour obtenir une valeur pour le premier coefficient a.

Selon l'exemple illustré, la première fonction de hachage cryptographique H1 et la deuxième fonction de hachage cryptographique H2 sont identiques.

En outre, similairement à la première étape d'application, la valeur obtenue pour le premier coefficient a est égale à la valeur en hexadécimal du résultat obtenu par application de la deuxième fonction de hachage cryptographique H2 sur le deuxième résultat R2.

A la troisième étape d'application, il est appliqué une troisième fonction de hachage cryptographique H3 sur le troisième résultat R3 pour obtenir une valeur pour le deuxième coefficient b.

Selon l'exemple illustré, la première fonction de hachage cryptographique H1 et la troisième fonction de hachage cryptographique H3 sont identiques.

En outre, similairement à la première étape d'application, la valeur obtenue pour le deuxième coefficient b est égale à la valeur en hexadécimal du résultat obtenu par application de la troisième fonction de hachage H3 sur le troisième résultat R3.

Lors de l'étape de détermination, il est déterminé la valeur de l'ordre q correspondante aux valeurs du module p, du premier coefficient a et du deuxième coefficient b.

Une telle valeur de l'ordre q est déterminée, par exemple, par utilisation de l'algorithme de Schoof ou sa version améliorée par Elkies et Atkin (également appelée algorithme SEA).

Lors de la phase de test 62, un test de conformité des valeurs du module p, du premier coefficient a, du deuxième coefficient b et de l'ordre q est mis en œuvre.

Les valeurs du module p, du premier coefficient a, du deuxième coefficient b et de l'ordre q sont considérées comme conformes si les valeurs du module p, du premier coefficient a, du deuxième coefficient b et de l'ordre q vérifient un critère.

Par exemple, le critère est choisi pour que la courbe elliptique obtenue à partir des valeurs du module p, du premier coefficient a, du deuxième coefficient b et de l'ordre q soit sûre.

Selon un mode de réalisation particulier non revendiqué, le critère de sûreté précédent est rempli dès que les valeurs du module p, du premier coefficient a, du deuxième coefficient b et de l'ordre q vérifient une pluralité de sous-critères.

Selon un premier sous-critère, la courbe elliptique est insensible à une attaque du rho de Pollard.

Par exemple, selon le premier sous-critère, la taille du sous-groupe q est supérieure à deux fois le niveau de sécurité.

Le niveau de sécurité dépend de l'application visée et constitue un objectif à atteindre. Concrètement, le niveau de sécurité correspond au logarithme du nombre minimal d'opérations qu'il est nécessaire de faire pour casser le système. A titre d'exemple, pour les applications civiles, 128 bits de sécurité sont recommandés.

Selon un deuxième sous-critère, la courbe elliptique est insensible à un transfert additif et un transfert multiplicatif. Par exemple, une expression du deuxième sous-critère est que $p^k = 1$ [q] implique que k est un nombre entier supérieur ou égal à 30. Le nombre k est appelé degré de plongement de la courbe considérée.

Selon un troisième sous-critère, la courbe elliptique est insensible à une attaque utilisant des endomorphismes issus de la multiplication. Par exemple, une expression du troisième sous-critère est d'imposer que le discriminant soit supérieur à une valeur seuil. Par discriminant, il est entendu ici la valeur absolue de la partie sans facteurs carrés de $((p+1-q)^2-4*p)$.

Selon un troisième sous-critère, la courbe elliptique est insensible à une attaque qui consiste à injecter une faute dans l'exécution du calcul pour forcer le calcul à converger vers la courbe « twist » de la courbe initiale. L'équation de la courbe « twist » est donnée par :

$$dY^2 = X^3 + aX + b \bmod p$$

où d est un élément du corps fini $\mathbb{F}_p$ n'admettant pas de racine carrée.

En variante, le critère de sûreté précédent est rempli dès que les valeurs du module p, du premier coefficient a, du deuxième coefficient b et de l'ordre q vérifient toute combinaison des sous-critères évoqués précédemment.

Selon une variante non revendiquée, l'étape de test de conformité implique une factorisation d'un premier nombre en nombres premiers pour vérifier au moins un critère. Selon une variante, la factorisation peut être mise en œuvre que sur l'ensemble des facteurs premiers inférieurs à un seuil, le critère étant vérifié lorsque le quotient du premier nombre par le produit de l'ensemble des facteurs premiers inférieurs au seuil est premier.

Par exemple, pour tester que l'ordre de la courbe twist comporte au moins un facteur premier supérieur à $2^{100}$, on commence par extraire tous les facteurs premiers jusqu'à $2^{80}$ par la méthode ECM (aussi appelée factorisation de Lenstra pour les courbes elliptiques). Si le résidu est premier et vérifie le critère, la courbe est déclarée sûre vis-à-vis du critère, sinon, si le résidu est composite ou inférieur au seuil, la courbe est rejetée.

Selon l'exemple revendiqué, le critère est vérifié si l'ensemble des sous-critères suivants est vérifié :

- le module p est un nombre premier et est compris entre $2^{l-1}$ et $2^l$ ;
- l'ordre q est un nombre premier et est compris entre $2^{l-1}$ et $2^l$ ;
- le degré de plongement de la courbe et le degré de plongement de la courbe twist sont supérieurs à $2^{100}$ ;
- l'ordre de la courbe twist comporte au moins un facteur premier supérieur à $2^{100}$, et
- le discriminant de la courbe est supérieur à $2^{100}$.

Comme visible sur la figure 2, deux cas existent et sont représentés schématiquement par les flèches 64 et 66.

Selon la flèche 64, les valeurs du module p, du premier coefficient a, du deuxième coefficient b et de l'ordre q ne sont pas conformes avec le critère.

Dans ce cas, la valeur du compteur est incrémentée par ajout d'un nombre entier.

Par exemple, le nombre entier est égal à 1.

La phase de calcul 60 et la phase de test 62 sont alors itérées.

Selon la flèche 66, les valeurs du module p, du premier coefficient a, du deuxième coefficient b et de l'ordre q sont conformes avec le critère.

Dans ce cas, des paramètres sont générés, les paramètres étant tels que le module p, le premier coefficient a, le deuxième coefficient b et l'ordre q ont pour valeur les valeurs du module p, du premier coefficient a, du deuxième coefficient b et de l'ordre q conformes avec le critère.

Autrement formulé, la phase de calcul 60 et la phase de test 62 sont itérées tant que les valeurs du module p, du premier coefficient a, du deuxième coefficient b et de l'ordre q ne sont pas conformes au critère.

Les paramètres générés à l'issue du procédé de génération sont les premières valeurs du module p, du premier coefficient a, du deuxième coefficient b et de l'ordre q vérifiant le critère.

Une fois le module p, le premier coefficient a, le deuxième coefficient b et l'ordre q générés par le procédé précédent, le point de base peut être choisi comme étant le point de coordonnées (x,y) de la courbe d'abscisse x la plus petite et d'ordonnée y paire tel que l'ordre du point de coordonnées (x,y) est q.

De préférence, le point est choisi de manière non arbitraire.

La demanderesse a effectué des tests montrant que le calcul converge avec de l'ordre de quelques fois $l^2$ itérations. Plusieurs courbes ont ainsi été générées grâce à ce procédé, et pour différents niveaux de sécurité. Ceci valide le procédé.

Le procédé permet de générer de multiples courbes elliptiques sûres de manière prouvée complètement rigide.

En outre, les courbes sont reliées à un texte qui permet d'authentifier la courbe, ce qui permet d'envisager facilement un changement périodique des courbes, par exemple par un changement périodique du texte.

Dans le cas illustré, le changement périodique est appliqué sur les données relatives à la date.

Cela permet également d'éviter son rejeu. Cela signifie qu'un attaquant ne peut pas forcer l'actualisation avec une courbe obsolète (passée pour légitime), puisqu'il ne contrôle pas la date, qui est dérivée d'une horloge de confiance.

En outre, selon un mode de réalisation non revendiqué, l'unicité obtenue par la génération permet la compression de la transmission des paramètres, de sorte qu'il suffit de transmettre la valeur du compteur et la valeur de l'ordre q pour obtenir la courbe elliptique.

Ceci apparaît schématiquement dans le deuxième espace E2 de la figure 2 (l'espace E1 correspondant à l'espace de génération).

A l'étape 68, sont transmis la valeur du compteur et la valeur de l'ordre q.

A l'étape 70, le texte est fourni.

Ainsi que l'illustrent schématiquement les étapes 72 et 74, il est réappliqué les mêmes étapes qu'à la construction, sauf qu'ici la bonne valeur du compteur est connue. Ainsi, les opérations O1, O2 et O3 sont appliquées pour obtenir des résultats intermédiaires à l'étape 72, puis les fonctions de hachages cryptographiques H1, H2 et H3 sont appliquées aux résultats intermédiaires pour obtenir le module p, le premier coefficient a et le deuxième coefficient b.

La transmission est ainsi plus aisée puisque seules la valeur du compteur et la valeur de l'ordre q sont transmises. Il est à noter que la transmission de q évite simplement au récepteur de recalculer l'ordre de la courbe (ce qui ne serait pas raisonnable).

En outre, selon le mode de réalisation revendiqué, il suffit de transmettre, en sus de la valeur du compteur, la trace de la courbe définie comme la quantité (p+1-q), sur seulement l/2 bits.

De fait, en exploitant la borne de Hasse, il apparaît que la différence entre (p+1) et q est bornée en valeur absolue par deux fois la racine de p. Ainsi, la valeur du compteur permet d'obtenir le module p, et les l/2 bits de la trace permettent de déduire tous les bits de l'ordre q.

Dans un tel mode de réalisation, la transmission de l'intégralité des paramètres de courbes du concepteur vers l'utilisateur en l/2 + 48 bits, l étant la longueur en bits de l'ordre q et 48 le nombre de bits associés à la valeur du compteur.

La courbe elliptique ainsi générée via la génération des paramètres est utilisable pour de multiples applications cryptographiques, comme les postes de radio ou les systèmes de repérage.

Chacun des procédés proposés peut être mis en œuvre à l'aide d'un ordinateur quelconque ou tout autre type de dispositif. De multiples systèmes peuvent être utilisés avec des programmes mettant en œuvre les procédés précédents mais il est également envisageable d'utiliser des appareils dédiés à la mise en œuvre des procédés précédents, ceux-ci pouvant s'insérer dans les dispositifs propres à mesurer les données fournies. De plus, les modes de réalisation proposés ne sont pas reliés à un langage de programmation particulier. Incidemment, cela implique que de multiples langages de programmation peuvent être utilisés pour mettre en œuvre un des procédés précédemment détaillés.

Le procédé est applicable également pour générer des courbes présentées sous d'autres modèles que le modèle de Weierstrass, et nécessitant une ou plusieurs constantes aléatoires. Par exemple, le procédé est utilisé pour générer des courbes sous forme d'Edwards, de Jacobi, de Montgomery ou de Hessiennes. Typiquement, dans la formulation d'Edwards, au lieu de générer les deux coefficients a et b, il est généré un seul coefficient usuellement noté d selon laquelle une courbe elliptique s'écrit sous la forme $x^2 + y^2 = 1 + d*x^2*y^2$.

Les procédés et modes de réalisations décrits ci-dessus sont aptes à être combinés les uns aux autres, totalement ou partiellement, pour donner lieu à d'autres modes de réalisation de l'invention.

## Revendications

1. Procédé de génération de paramètres, les paramètres étant les paramètres d'une courbe elliptique, les paramètres étant le module (p), l'ordre (q) de la courbe elliptique ainsi que soit un premier coefficient (d) dans le cas où la courbe elliptique s'écrit sous la forme $x^2 + y^2 = 1 + d*x^2*y^2$ où x, y sont des éléments du corps fini $\mathbb{F}_{p,}$, soit un premier coefficient (a) et un deuxième coefficient (b), dans le cas où la courbe elliptique s'écrit sous la forme $y^2 = x^3 + ax + b$ où x, y sont des éléments du corps fini $\mathbb{F}_p$, le procédé comprenant au moins l'étape de :

- choix d'un texte vérifiant au moins l'une des propriétés suivantes :

- une première propriété selon laquelle le texte comporte plus de 16 caractères,
- une deuxième propriété selon laquelle le texte comporte une date.

- initialisation de la valeur d'un compteur à une valeur initiale,
- pour chaque paramètre, obtention d'une valeur pour le paramètre,

l'étape d'obtention comportant, lorsque les paramètres sont le module (p), le premier coefficient (d) et l'ordre (q) :

- pour le module (p) :

- calcul d'une première opération ($O_1$) appliquée sur le texte, la valeur du compteur et une première constante, pour obtenir un premier résultat (R1), la première opération ($O_1$) étant une concaténation, et
- application d'une première fonction de hachage cryptographique (H1) sur le premier résultat (R1) pour obtenir la valeur pour le module (p),

- pour le premier coefficient (d) :

- calcul d'une deuxième opération ($O_2$) appliquée sur le texte, la valeur du compteur et une deuxième constante, pour obtenir un deuxième résultat (R2), la deuxième opération ($O_2$) étant une concaténation, la deuxième constante étant distincte de la première constante, et
- application d'une deuxième fonction de hachage cryptographique (H2) sur le deuxième résultat (R2) pour obtenir la valeur pour le premier coefficient (d),

- pour l'ordre (q), détermination à partir des valeurs du module (p) et du premier coefficient (d),

l'étape d'obtention comportant, lorsque les paramètres sont le module (p), le premier coefficient (a), le deuxième coefficient (b) et l'ordre (q) :

- pour le module (p) :

- calcul d'une première opération ($O_1$) appliquée sur le texte, la valeur du compteur et une première constante, pour obtenir un premier résultat (R1), la première opération ($O_1$) étant une concaténation, et
- application d'une première fonction de hachage cryptographique (H1) sur le premier résultat (R1) pour obtenir la valeur pour le module (p),

- pour le premier coefficient (a) :

- calcul d'une deuxième opération ($O_2$) appliquée sur le texte, la valeur du compteur et une deuxième constante, pour obtenir un deuxième résultat (R2), la deuxième opération ($O_2$) étant une concaténation, la deuxième constante étant distincte de la première constante, et
- application d'une deuxième fonction de hachage cryptographique (H2) sur le deuxième résultat (R2) pour obtenir la valeur pour le premier coefficient (a),

- pour le deuxième coefficient (b) :

- calcul d'une troisième opération ($O_3$) appliquée sur le texte, la valeur du compteur et une troisième constante, pour obtenir un troisième résultat (R3), la troisième opération ($O_3$) étant une concaténation, la troisième constante étant distincte de la première constante et de la deuxième constante, et
- application d'une troisième fonction de hachage cryptographique (H3) sur le troisième résultat (R3) pour obtenir la valeur pour le deuxième coefficient (b),

- pour l'ordre (q), détermination à partir des valeurs du module (p), du premier coefficient (a) et du deuxième coefficient (b),
- test de la conformité de chaque valeur de paramètre obtenue avec un critère, le critère étant vérifié si l'ensemble des sous critères suivants est vérifié :
- le module (p) est un nombre premier et est compris entre $2^{l-1}$ et $2^l$ ;
- l'ordre (q) est un nombre premier et est compris entre $2^{l-1}$ et $2^l$ ;
- le degré de plongement de la courbe et le degré de plongement de la courbe twist sont supérieurs à $2^{100}$ ;
- l'ordre de la courbe twist comporte au moins un facteur premier supérieur à $2^{100}$ ; et
- le discriminant de la courbe est supérieur à $2^{100}$,

où l est la longueur en bits de l'ordre (q),

lorsqu'au moins une valeur n'est pas conforme avec ledit critère, incrémentation de la valeur du compteur par ajout d'un nombre entier et itération des étapes d'obtention et de test,
lorsque chaque valeur est conforme avec le critère, génération des paramètres tels que chaque paramètre a pour valeur la valeur conforme avec ledit critère,
le procédé étant **caractérisé en ce qu'**il comporte, en outre, uniquement la transmission de la valeur du compteur et de la valeur de la trace de la courbe donnée par la différence entre le module (p) et l'ordre (q) à laquelle est ajoutée le nombre 1.

2. Produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en œuvre d'un procédé selon la revendication 1 lorsque le programme d'ordinateur est mis en œuvre sur l'unité de traitement des données.

3. Support lisible d'informations sur lequel est mémorisé un programme d'ordinateur comprenant des instructions de programme, le programme d'ordinateur étant chargeable sur une unité de traitement de données et adapté pour entraîner la mise en œuvre d'un procédé selon la revendication 1 lorsque le programme d'ordinateur est mis en œuvre sur l'unité de traitement des données.

**Patentansprüche**

1. Verfahren zum Erzeugen von Parametern, wobei die Parameter die Parameter einer elliptischen Kurve sind, wobei die Parameter der Modul (p), die Ordnung (q) der elliptischen Kurve sowie entweder ein erster Koeffizient (d) in dem Fall, in dem die elliptische Kurve in der Form $x^2 + y^2 = 1 + d*x^2*y^2$ geschrieben ist, wobei x, y Elemente des endlichen Körpers $\mathbb{F}_p$ sind, oder ein erster Koeffizient (a) und ein zweiter Koeffizient (b) in dem Fall, in dem die elliptische Kurve in der Form $y^2 = x^3 + ax + b$ geschrieben ist, wobei x, y Elemente des endlichen Körpers $\mathbb{F}_p$ sind, sind, wobei das Verfahren mindestens den Schritt umfasst des:

- Auswählens eines Textes, der mindestens eine der folgenden Eigenschaften erfüllt:

- eine erste Eigenschaft, gemäß der der Text mehr als 16 Zeichen aufweist,
- eine zweite Eigenschaft, gemäß der der Text ein Datum aufweist,

- Initialisierens des Wertes eines Zählers auf einen Anfangswert,
- für jeden Parameter Gewinnens eines Wertes für den Parameter,

wobei der Gewinnungsschritt, wenn die Parameter der Modul (p), der erste Koeffizient (d) und die Ordnung (q) sind, aufweist:

- für den Modul (p):

- Berechnen einer ersten Operation ($O_1$), die auf den Text, den Zählerwert und eine erste Konstante angewandt wird, um ein erstes Ergebnis (R1) zu erhalten, wobei die erste Operation ($O_1$) eine Verkettung ist, und
- Anwenden einer ersten kryptographischen Hash-Funktion (H1) auf das erste Ergebnis (R1), um den Wert für den Modul (p) zu erhalten,

- für den ersten Koeffizienten (d):

- Berechnen einer zweiten Operation ($O_2$), die auf den Text, den Zählerwert und eine zweite Konstante angewandt wird, um ein zweites Ergebnis (R2) zu erhalten, wobei die zweite Operation ($O_2$) eine Verkettung ist, wobei die zweite Konstante von der ersten Konstante verschieden ist, und
- Anwenden einer zweiten kryptografischen Hash-Funktion (H2) auf das zweite Ergebnis (R2), um den Wert für den ersten Koeffizienten (d) zu erhalten,

- für die Ordnung (q), Bestimmen aus den Werten des Moduls (p) und des ersten Koeffizienten (d),

wobei der Schritt des Gewinnens, wenn die Parameter der Modul (p), der erste Koeffizient (a), der zweite Koeffizient (b) und die Ordnung (q) sind, aufweist:

- für den Modul (p):

- Berechnen einer ersten Operation ($O_1$), die auf den Text, den Zählerwert und eine erste Konstante angewandt wird, um ein erstes Ergebnis (R1) zu erhalten, wobei die erste Operation ($O_1$) eine Verkettung ist, und
- Anwenden einer ersten kryptographischen Hash-Funktion (H1) auf das erste Ergebnis (R1), um den Wert für den Modul (p) zu erhalten,

- für den ersten Koeffizienten (a):

- Berechnen einer zweiten Operation ($O_2$), die auf den Text, den Zählerwert und eine zweite Konstante angewandt wird, um ein zweites Ergebnis (R2) zu erhalten, wobei die zweite Operation ($O_2$) eine Verkettung ist, wobei die zweite Konstante von der ersten Konstante verschieden ist, und
- Anwenden einer zweiten kryptografischen Hash-Funktion (H2) auf das zweite Ergebnis (R2), um den Wert für den ersten Koeffizienten (a) zu erhalten,

- für den zweiten Koeffizienten (b):

- Berechnen einer dritten Operation ($O_3$), die auf den Text, den Zählerwert und eine dritte Konstante angewandt wird, um ein drittes Ergebnis (R3) zu erhalten, wobei die

dritte Operation ($O_3$) eine Verkettung ist, wobei die dritte Konstante von der ersten Konstante und der zweiten Konstante verschieden ist, und
- Anwenden einer dritten kryptographischen Hash-Funktion (H3) auf das dritte Ergebnis (R3), um den Wert für den zweiten Koeffizienten (b) zu erhalten,

- für die Ordnung (q), Bestimmen aus den Werten des Moduls (p), des ersten Koeffizienten (a) und des zweiten Koeffizienten (b),
- Prüfen der Übereinstimmung jedes gewonnenen Parameterwertes mit einem Kriterium, wobei das Kriterium erfüllt ist, wenn alle folgenden Unterkriterien erfüllt sind:

- der Modul (p) ist eine Primzahl und liegt zwischen $2^{l-1}$ und $2^{l}$;
- die Ordnung (q) ist eine Primzahl und liegt zwischen $2^{l-1}$ und $2^{l}$;
- der Einbettungsgrad der Kurve und der Einbettungsgrad der Twistkurve sind größer als $2^{100}$;
- die Ordnung der Twistkurve weist mindestens einen Primfaktor größer als $2^{100}$ auf; und
- die Diskriminante der Kurve ist größer als $2^{100}$,

wobei I die Bitlänge der Ordnung (q) ist,

wenn mindestens ein Wert das genannte Kriterium nicht erfüllt, Inkrementieren des Wertes des Zählers durch Hinzufügen einer ganzen Zahl und Iterieren der Gewinnungs- und Prüfschritte,
wenn jeder Wert mit dem Kriterium übereinstimmt, Erzeugen von Parametern, derart dass jeder Parameter als Wert den Wert hat, der mit dem Kriterium übereinstimmt,
wobei das Verfahren **dadurch gekennzeichnet ist, dass** es außerdem allein die Übertragung des Zählerwertes und des Wertes des Kurvenverlaufs aufweist, der durch die Differenz zwischen dem Modul (p) und der Ordnung (q) gegeben ist, zu der die Zahl 1 hinzugefügt wird.

2. Computerprogrammprodukt, das einen lesbaren Informationsträger umfasst, auf dem ein Computerprogramm gespeichert ist, das Programmanweisungen umfasst, wobei das Computerprogramm auf eine Datenverarbeitungseinheit geladen werden kann und geeignet ist, die Ausführung eines Verfahrens nach Anspruch 1 zu veranlassen, wenn das Computerprogramm auf der Datenverarbeitungseinheit ausgeführt wird.

**3.** Lesbarer Informationsträger, auf dem ein Computerprogramm mit Programmbefehlen gespeichert ist, wobei das Computerprogramm auf eine Datenverarbeitungseinheit geladen werden kann und geeignet ist, die Ausführung eines Verfahrens nach Anspruch 1 zu veranlassen, wenn das Computerprogramm auf der Datenverarbeitungseinheit ausgeführt wird.

**Claims**

**1.** A method for generating parameters, parameters being the parameters of an elliptic curve, the parameters being the modulus (p), the order (q) of the elliptic curve and either a first coefficient in the case the elliptic curve is written in the form $x^2 + y^2 = 1+d*x^2* y^2$ where x, y are elements of the finite field $\mathbb{F}_p$, either a first coefficient (a) and a second coefficient (b), in the case the elliptic curve is written in the form $Y^2=X^3+aX+b$ where x, y are elements of the finite field $\mathbb{F}_p$, the method including at least the following steps of:

- selecting a text satisfying at least one of the following properties;

- a first property according to which the text comprises more than 16 characters,
- a second property according to which the text includes a date,

- initializing the value of a counter to an initial value;
- for each parameter, obtaining a value for the parameter,
the obtaining step comprises, when the parameters are the modulus (p), the first coefficient (d) and the order (q) ;
- for the modulus (p):

- computing a first operation ($O_1$) applied to the text, the value of the counter and a first constant, so as to obtain a first result (R1), the first operation ($O_1$) being a concatenation, and
- applying a first cryptographic hash function (H1) to the first result (R1) so as to obtain a value for the modulus (p),

- for the first coefficient (d)

- computing a second operation ($O_2$) applied to the text, the value of the counter and a second constant, so as to obtain a second result (R2), the second operation ($O_2$) being

a concatenation, the second constant being distinct for the first constant, and
- applying a second cryptographic hash function (H2) to the second result (R2) so as to obtain a value for the first coefficient (d),

- for the order (q), determination from the values of the modulus (p) and the first coefficient (d),

the obtaining step comprising, when the parameters are the modulus (p), the first coefficient (a), the second coefficient (b) at the order (q):

- for the modulus (p):

- computing a first operation ($O_1$) applied to the text, the value of the counter and a first constant, so as to obtain a first result (R1), the first operation ($O_1$) being a concatenation, and
- applying a first cryptographic hash function (H1) to the first result (R1) so as to obtain a value for the modulus (p),

- for the first coefficient (a)

- computing a second operation ($O_2$) applied to the text, the value of the counter and a second constant, so as to obtain a second result (R2), the second operation ($O_2$) being a concatenation, the second constant being distinct for the first constant, and
- applying a second cryptographic hash function (H2) to the second result (R2) so as to obtain a value for the first coefficient (a),

- for the second coefficient (b)

- computing a third operation ($O_3$) applied to the text, the value of the counter and a third constant, so as to obtain a third result (R3), the third operation ($O_3$) being a concatenation, the third constant being distinct for the first and the second constant, and
- applying a third cryptographic hash function (H3) to the third result (R3) so as to obtain a value for the second coefficient (b),

- for the order (q), determination from the values of the modulus (p), the first coefficient (a) and the second coefficient (b),
- testing the compliancy of each parameter value obtained with at least one criterion, the criterion being satisfied if the following set of sub-criteria is satisfied:

- the modulus (p) is a prime number and is comprised between $2^{l-1}$ and $2^l$;
- the order (q) is a prime number and is comprised between $2^{l-1}$ and $2^l$;
- the degree of embedding of the curve and the degree of embedding of the twist curve are greater than $2^{100}$;
- the order of the twist curve has at least one prime factor that is greater than $2^{100}$; and
- the discriminant of the curve is greater than $2^{100}$,

where l is the length in bits of the order (q),

when at least one value does not comply with the said at least one criterion, incrementing the value of the counter by adding of an integer, and of iteration for iterating the steps of obtaining and testing; and
when each value is in compliance with the criterion, generating the parameters such that the value of each parameter is the value which complies with the said at least one criterion,
the method being **characterized in that** it comprises, in addition, only the transmission of the value of the counter and the value of the trace of the curve given by the difference between the modulus (p) and the order (q) to which is added the number 1.

2. A computer program product comprising a readable information storage medium, on which is stored a computer program comprising of program instructions the computer program being loadable on to a data processing unit and adapted to lead to the carrying out of a method according to claim 1 when the computer program is carried out on the data processing unit.

3. A readable information storage medium on which is stored a computer program comprising program instructions, the computer program being loadable onto a data processing unit and adapted to lead to the carrying out of a method according to claim 1 when the computer program is carried out on the data processing unit.

FIG.1

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DANIEL J. BERNSTEIN et al.** How to manipulate curve standards : a white paper for the black hat. *IACR ePrint,* 27 Septembre 2015, vol. 20150927, 155915

- **THOMAS BAIGNÈRES et al.** *Trap Me If You Can Million Dollar Curve,* 01 Février 2016